# EUROPEAN PATENT APPLICATION

(11) **EP 1 832 639 A2**
(43) Date of publication of application: **12.09.2007**
(21) Application number: 07004921.8
(22) Date of filing: 09.03.2007
(51) Int. Cl.: C09K 3/30, C09K 5/00, A62D 1/00, C08J 9/00, C11D 7/00

(54) **Method for generating pollution credits**

(30) Priority: 10.03.2006 US 372800
(71) Applicant: Honeywell International, Inc., Morristown, New Jersey 07962 (US)
(72) Inventor: Luly, Matthew H., Hamburg, NY 14075 (US); Singh, Ryjiv R., Getzville, NY 14075 (US)
(74) Representative: Hucker, Charlotte Jane

(57) **Abstract**

A method for the development or generation of pollution credits by the substitution of lower global warming potential (GWP) haloolefin compounds, preferably fluoroolefin compounds, for higher GWP compounds, such as perfluorocarbon compounds (PFC's), hydrofluorocarbon compounds (HFC's), chlorofluorocarbons (CFC's), hydrochlorofluorocarbon compounds (HCFC's), and the like, in compositions and processes employing or producing the higher GWP compounds, and receive allocation of pollution credits for such substitution.

## Description

### FIELD OF THE INVENTION

This invention relates to a method for the development or generation of pollution credits by the substitution of lower global warming potential (GWP) haloolefin compounds, preferably fluoroolefin compounds, for higher GWP compounds, such as perfluorocarbon compounds (PFC's), hydrofluorocarbon compounds (HFC's), chlorofluorocarbons (CFC's), hydrochlorofluorocarbon compounds (HCFC's), and the like, in compositions and processes employing the higher GWP compounds, and receiving allocation of pollution credits for such substitution.

### BACKGROUND OF THE INVENTION

. Concern over human impact on climate change prompted a 1997 United Nations conference in Kyoto, Japan. The resulting Kyoto Protocol seeks to stabilize greenhouse gases, in the atmosphere "at a level that Would prevent dangerous anthropogenic interference with the climate system." An important feature of the Protocol is its use of market-based mechanisms, including emissions trading, which can be used to allow parties to reach their emission targets.

Perfluorocarbon compounds (PFC's), hydrofluorocarbon compounds (HFC's), chlorofluorocarbons (CFC's), hydrochlorofluorocarbon compounds (HCFC's), and their like, have been widely used in a broad variety of industrial, commercial, consumer and public use applications and uses. Recently, concern has increased about potential damage to the earth's atmosphere and climate, and certain perfluorocarbon compounds (PFC's), hydrofluorocarbon compounds (HFC's), chlorofluorocarbons (CFC's), hydrochlorofluorocarbon compounds (HCFC's), and their like, have been identified as particularly problematic in this regard, at least in part because of the greenhouse gas effect and relatively high global warming potentials (GWP) associated with those compounds. In view of the relatively high GWP of these compounds there has been a vigorous search for alternative compounds of lower GWP to replace these compounds of higher GWP in those use, application and compositions to be used in such applications and uses.

The entry into force of the Kyoto Protocol on February 16, 2005 has created a market for GWP credits. Such a market has been created and additional markets are continuing to be created for such GWP credits a adherence to and compliance with the terms of the Kyoto Protocol is expanded. GWP credits are awarded or allocated to entities that take action to reduce pollutant emissions that contribute to global warming. These global warming credits can typically be sold, traded or banked for future use. Thus, there is an economic advantage as well as an environmental advantage to be able to replace higher GWP compounds with compounds of lower GWP in a variety of applications and uses or in compositions intended to be employed in such applications or uses, and such economic advantage can be in the form of GWP credits.

### SUMMARY OF THE INVENTION

In accordance with the invention, a method for generating GWP credits comprises replacing, or using in place of, compounds of higher GWP, a haloolefin compound or haloolefin-containing composition, preferably a fluoroolefin compound or fluoroolefin-containing composition, of relatively lower GWP, and obtaining an allocation of GWP warming credit for doing so.

In accordance with this invention the replacement of, or use or synthesis in place of, the compound or composition of higher GWP by the haloolefin compound or haloolefin-containing composition, preferably a fluoroolefin compound or fluoroolefin-containing composition, of relatively lower GWP is in a compound or composition to be used in any suitable field, such as, but not limited to, air-conditioning, refrigeration, heat transfer, blowing agent, aerosol or sprayable propellant, gaseous dielectric, cryosurgery, veterinary procedures, dental procedures, fire extinguishing, flame suppression, carriers for flavorings and fragrances, cleaners, air horns, pellet guns, topical anesthetics, and expansion applications. In preferred embodiments of this invention the replacement of, or use in place of, the compound or composition of higher GWP is by the fluoroolefin compound or fluoroolefin-containing composition of relatively lower GWP and is in a compound or composition to be used in the fields of refrigeration, blowing agent compositions, and aerosol or sprayable propellants.

In one preferred aspect of this invention the replaced compound or composition of higher GWP is a compound or composition thereof wherein the replaced compound is preferably selected from the group of perfluorocarbon compounds (PFC's), hydrofluorocarbon compounds. (HFC's), chlorofluorocarbons (CFC's), and hydrochlorofluorocarbon compounds (HCFC's).

In another preferred aspect of this invention the fluoroolefin of the fluoroolefin compound or fluoroolefin-containing , composition is a fluoroolefin containing 3 to 4 carbon atoms, more preferably is a trifluoropropene or tetrafluoropropene or pentafluoropropene or mixtures thereof, and still more preferably is 1,3,3,3-tetrafluoropropene or 2,3,3,3-tetrafluoropropene or mixtures thereof.

In yet another aspect of this invention the haloolefln-containing composition, preferably the fluoroolefin-containing composition, is a composition of: (a) a compound selected from CO₂ and trifluoroiodomethane, and (b) an olefin containing 3 to 4 carbon atoms, more preferably a tetrafluoropropene or pentafluoropropene or mixtures thereof, and still more preferably 1,3,3;3-tetrafluoropropene or 2,3,3,3-tetrafluoropropene or mixtures thereof.

### DETAILED DESCRIPTION OF THE INVENTION.

In accordance with the invention, a method for generating GWP credits comprises replacing, or using or synthesizing in place of, compounds of ,higher GWP, haloolefin compound or haloolefin-containing composition, preferably a fluoroolefin compound or fluoroolefin-containing composition, of relatively lower GWP, and obtaining an allocation of GWP warming credit for doing so.

For the purpose of this invention, "GWP" is defined as the value measured relative to CO2 and over a 100 year time horizon as defined in "The Scientific Assessment of Ozone Depletion", 2002, a report of the Meteorological Association, Global Ozone Monitoring Project. For the purpose of this invention, "allocation", "allocation" or "generation" of GWP credits is meant to include any system whereby credits are awarded, assigned, designated or otherwise credited by any public or private entity or agency. For the purpose of this invention, by "replacing" or "using in place of" is meant that in any type of end use, in any type of composition of formulation, in any process, in any type system, or in any synthesis manufacturing process, a compound or composition of higher GWP is replaced, by a haloolefin compound or haloolefin-containing composition, preferably a fluoroolefin compound or fluoroolefin-containing composition, of relatively lower GWP, or that a haloolefin compound or haloolefin-containing composition, preferably a fluoroolefin compound or fluoroolefin-containing composition, of relatively lower GWP is manufactured, synthesized or formulated instead of compound or composition of higher GWP.

With the method of this invention one can generate GWP credits by replacing, or using in place of, compounds of higher GWP, a haloolefin compound or haloolefin-containing composition, preferably a fluoroolefin compound or fluoroolefin-containing composition, of relatively lower GWP, and obtaining an allocation of GWP warming credit for doing so, which allocated GWP credits may then be sold, traded or banked for future use, as the holder of the, credit desires.

In accordance with this invention the replacement of, or use in place of, the compound or composition of higher GWP by the haloolefin compound or haloolefin-containing composition, preferably a fluoroolefin compound or fluoroolefin-containing composition, of relatively lower GWP is in a compound or composition to be used in any suitable field, such as, but not limited to, air conditioning, refrigeration, heat transfer, blowing agent, aerosol or sprayable propellant, gaseous dielectric, cryosurgery, veterinary procedures, dental procedures, fire extinguishing, flame suppression, carriers for flavorings and fragrances, cleaners, air horns, pellet guns, topical anesthetics, and expansion applications. In preferred embodiments of this invention the replacement of, or use in place of, the compound or composition of higher GWP is by a fluoroolefin compound or fluoroolefin-containing composition of relatively lower GWP and is in a compound or composition to be used in the fields of refrigeration, blowing agent compositions, and aerosol or sprayable propellants.

In one preferred aspect of this invention the replaced compound or composition of higher GWP is a compound or composition thereof wherein the replaced compound is preferably selected from the group of perfluorocarbon compounds (PFC's), hydrofluorocarbon compounds (HFC's), chlorofluorocarbons (CFC's), and hydrochlorofluorocarbon compounds (HCFC's).

In another preferred aspect of this invention the fluoroolefin of the fluoroolefin compound or fluoroolefin-containing composition is an olefin containing 3 to 4 carbon atoms, more preferably is a trifluoropropene or tetrafluoropropene or pentafluoropropene or mixtures thereof, and still more preferably is 1,3,3,3-tetrafluoropropene or 2,3,3,3-tetrafluoropropene or mixtures thereof.

In yet another aspect of this invention the haloolefin-containing composition, preferably a fluoroolefin-containing composition, is a composition of: (a) a compound selected from CO₂ and trifluoroiodomethane, and (b) an olefin containing 3 to 4 carbon atoms, more preferably a trifluoropropene or tetrafluoropropene or pentafluoropropene or mixtures thereof, and still more preferably 1,3,3,3-tetrafluoropropene or 2,3,3,3-tetrafluoropropene or mixtures thereof.

As examples of various aspects of this invention there may be mentioned the following non-limiting examples. One aspect of the invention comprises obtaining an allocation of GWP credit for replacing, or using in place of, compounds of higher GWP, with an azeotrope-like composition of tetrafluoropropene and pentafluoropropene in refrigerant compositions, refrigeration systems, blowing agent compositions and aerosol propellants, such as in the manner disclosed in US 2005/0233932 A1, which is incorporated herein by reference thereto.

Another aspect of the invention comprises obtaining an allocation of GWP credit for replacing, or using in place of, compounds of higher GWP, with an azeotrope-like composition of tetrafluoropropene and trifluoroiodomethane in refrigerant compositions, refrigeration systems, blowing agent compositions and aerosol propellants, such as in the manner disclosed in US 2005/0233934 A1 and US 2005/0233931 A1, which are incorporated herein by reference thereto.

Another aspect of the invention comprises obtaining an allocation of GWP credit for replacing, or using in place of, compounds of higher GWP, with a composition of 1,3,3,3-tetrafluoropropene and carbon dioxide in heat transfer compositions, refrigerant compositions, refrigeration systems, blowing agent compositions, cryosurgery methods, solvents, extractants, cleaning agents, and aerosol propellants, such as in the manner disclosed in US 2005/0241805 A1, which is incorporated herein by reference thereto.

Another aspect of the invention comprises obtaining an allocation of GWP credit for replacing, or using in place of, compounds of higher GWP, at least one fluoroolefin compound having 3 or 4 carbon atoms in heat transfer compositions, refrigerant compositions, refrigeration systems, blowing agent compositions, cryosurgery methods, solvents, extractants, cleaning agents, and aerosol propellants, such as in the manner disclosed in US 2004/0119047 A1 US 2004/0089839 A1, and US 2004/0256594 A1 which are incorporated herein by reference thereto.

In an especially preferred aspect of the invention, the fluoroolefin compound or fluoroolefin-containing composition of relatively lower GWP has a GWP of not greater than about 150.

Having described the invention in detail by reference to the preferred embodiments and specific examples thereof, it will be apparent that modifications and variations are possible without departing from the spirit and scope of the disclosure and claims.

## Claims

1. A method for generating global warming potential (GWP) credits comprising (a) replacing, or using or synthesizing in place of, a compound or composition of higher GWP a haloolefin compound or haloolefin-containing composition of relatively lower GWP, and (b) obtaining an allocation of GWP warming credit for doing so.

2. A method of claim 1 wherein the haloolefin compound or haloolefin-containing composition is a fluoroolefin compound or fluoroolefin-containing composition.

3. A method of claim 2 wherein the fluoroolefin of the fluoroolefin compound or fluoroolefin-containing composition is a fluoroolefin containing 3 to 4 carbon atoms.

4. A method of claim 1 wherein the replaced compound or composition of higher GWP is a compound or composition thereof wherein the replaced compound is selected from the group consisting of perfluorocarbon compounds (PFC's), hydrofluorocarbon compounds (HFC's), chlorofluorocarbons (CFC's), and hydrochlorofluorocarbon compounds (HCFC's).

5. A method of claim 3 wherein the replaced compound or composition of higher GWP is a compound or composition thereof wherein the replaced compound is selected from the group consisting of perfluorocarbon compounds (PFC's), hydrofluorocarbon compounds (HFC's), chlorofluorocarbons (CFC's), and hydrochlorofluorocarbon compounds (HCFC's).

6. A method according to claim 1 wherein the replacement of the compound or composition of higher GWP by the fluoroolefin compound or fluoroolefin-containing composition of relatively lower GWP is in a compound or composition to be used in a field selected from air-conditioning, refrigeration, heat transfer, blowing agent, aerosol or sprayable propellant, gaseous dielectric, cryosurgery, veterinary procedures, dental procedures, fire extinguishing, flame suppression, carriers for flavorings and fragrances, cleaners, air horns, pellet guns, topical anesthetics, and expansion applications.

7. A method according to claim 5 wherein the replacement of the compound or composition of higher GWP by the fluoroolefin compound or fluoroolefin-containing composition of relatively lower GWP is in a compound or composition to be used in a field selected from air-conditioning, refrigeration, heat transfer, blowing agent, aerosol or sprayable propellant, gaseous dielectric, cryosurgery, veterinary procedures, dental procedures, fire extinguishing, flame suppression, carriers for flavorings and fragrances, cleaners, air horns, pellet guns, topical anesthetics, and expansion applications.

8. A method according to claim 7 wherein the replacement of the compound or composition of higher GWP by the fluoroolefin compound or fluoroolefin-containing composition of relatively lower GWP is in a refrigeration use, in a blowing agent composition, or in an aerosol or sprayable propellant.

9. A method according to claim 7 wherein the fluoroolefin compound comprises a fluoroolefin selected from the group consisting of trifluoropropene and tetrafluoropropene and pentafluoropropene and mixtures thereof, and the fluoroolefin-containing composition comprises trifluoriodomethane and a fluoroolefin selected from the group consisting of trifluoropropene and tetrafluoropropene and pentafluoropropene and mixtures thereof.

10. A method according to claim 10 wherein the tetrafluorpropene is selected from 1.3,3,3-tetraftuoropropene or 2,3,3,3-tetrafluoropropene and mixtures thereof.
